# FASCICULE DE BREVET EUROPEEN

(11) **EP 0 756 975 B1**
(45) Date de publication et mention de la délivrance du brevet: **27.02.2002**
(21) Numéro de dépôt: 96401660.4
(22) Date de dépôt: 25.07.1996
(51) Int. Cl.: B60R 25/02

(54) **Agencement d'un antivol de colonne de direction**
Diebstahlsicherung für Lenksäule
Anti-theft-device for steering column

(30) Priorité: 01.08.1995 FR 9509450
(43) Date de publication de la demande: 05.02.1997
(73) Titulaire: ANTIVOLS SIMPLEX, 21059 Dijon Cédex (FR)
(72) Inventeur: Jouffroy, Michel, 21110 Fauverney (FR)
(74) Mandataire: Kohn, Philippe

(56) Documents cités:
- DE-B- 2 706 440
- FR-A- 2 610 882

## Description

La présente invention concerne un agencement d'un antivol de direction de véhicule automobile.

Selon la conception la plus répandue d'un antivol de direction de véhicule automobile, celui-ci est essentiellement constitué par un pêne de verrouillage qui est reçu dans un logement formé dans un organe rotatif de la colonne de direction, sous l'action d'un ressort de rappel, et qui peut être escamoté, pour libérer la colonne de direction, par un verrou à barillets.

Un agencement classique d'un antivol de direction comporte :
- un tube de colonne de direction dans lequel un arbre de direction est monté tournant ;
- un tube d'antivol fixé au tube de colonne de direction et qui s'étend, selon une direction transversale sensiblement radiale par rapport à l'axe du tube de colonne de direction, en regard d'un trou formé dans le tube ; et
- un antivol monté dans le tube d'antivol et qui comporte un mécanisme d'entraînement et un fourreau de guidage, lié axialement au mécanisme, dont une extrémité s'étend axialement à travers le trou du tube de colonne de direction et qui guide en coulissement un pêne de verrouillage dont les déplacements sont commandés par le mécanisme entre une position de repos, dans laquelle l'extrémité libre du pêne est en retrait par rapport à l'extrémité du fourreau, et une position de verrouillage dans laquelle l'extrémité libre du pêne fait saillie axialement à l'intérieur du tube pour être reçue dans un logement de l'arbre de direction.

Une telle conception, connue par exemple du document FR-A-2.610.882 montrant le preambule de la revendication 1, présente plusieurs inconvénients.

Compte-tenu des tolérances de fabrication des différents composants, il est impossible de garantir que l'extrémité du fourreau de guidage du pêne de verrouillage est en contact contre la paroi externe du tube de colonne de direction.

Une telle imprécision dans le montage des composants peut aboutir à la présence d'un jeu qui nuit à la précision de fonctionnement de l'antivol et à un risque accru d'effraction si le tronçon d'extrémité libre du fourreau de guidage est insuffisamment maintenu par rapport au tube de colonne de direction.

Dans le cas d'un montage correct et précis, on constate qu'une tentative d'effraction par application d'un couple très important sur la colonne de direction avec l'antivol en position verrouillée aboutit à un recul axial du mécanisme d'antivol et du fourreau de guidage avec détérioration de ce dernier et ainsi à un échappement de l'extrémité libre du pêne de verrouillage en dehors du logement de l'arbre tournant de direction.

La présente invention a pour but de proposer un agencement perfectionné d'un antivol de direction du type mentionné précédemment qui permet de remédier aux inconvénients qui viennent d'être évoqués en assurant une coopération mécanique plus précise et plus fiable entre le fourreau de guidage et le tube de colonne de direction.

A cet effet, l'invention propose un agencement d'antivol caractérisé en ce que le fourreau de guidage comporte un tronçon principal lié axialement au mécanisme d'entraînement et un tronçon d'extrémité monté coulissant axialement par rapport au tronçon principal, et en ce que le tronçon d'extrémité est sollicité élastiquement par des moyens élastiques vers une position déterminée par rapport au tube de colonne de direction.

Selon d'autres caractéristiques de l'invention :
- Le tronçon d'extrémité du fourreau de guidage est monté coulissant dans le trou du tube de colonne de direction et il comporte une collerette de butée qui s'étend radialement vers l'extérieur en regard de la paroi externe du tube contre laquelle elle est sollicitée par les moyens élastiques;
- les moyens élastiques sont interposés entre la collerette et la face d'extrémité en vis-à-vis du tronçon principal du fourreau de guidage ;
- l'agencement comporte des moyens d'indexation angulaire du tronçon d'extrémité par rapport au tube de colonne de direction et par rapport au tronçon principal du fourreau de guidage ;
- il comporte des moyens pour limiter la course de déplacement relatif entre le tronçon principal et le tronçon d'extrémité du fourreau de guidage ;
- le tronçon d'extrémité du fourreau de guidage comporte deux pattes diamétralement opposées qui s'étendent axialement depuis le bord périphérique de la collerette et dont chacune est reçue en coulissement dans une rainure complémentaire formée dans le tronçon principal du fourreau de guidage ;
- chaque patte comporte une encoche axiale dans laquelle est reçu avec jeu un ergot porté par le tronçon principal du fourreau de guidage ;
- la collerette est incurvée pour épouser la forme cylindrique de la paroi externe du tube de colonne de direction ;
- le mécanisme d'entraînement comporte un boîtier tubulaire monté vissé dans le tube d'antivol et auquel est fixé le tronçon principal du fourreau de guidage du pêne.

D'autres caractéristiques et avantages de l'invention apparaîtront à la lecture de la description détaillée qui suit pour la compréhension de laquelle on se reportera aux dessins annexés dans lesquels :
- La figure 1 est une vue en section axiale partielle d'un agencement d'un antivol de direction de véhicule automobile selon l'état de la technique ;
- la figure 2 est vue similaire à celle de la figure 1 qui illustre un agencement conforme aux enseignements de l'invention et sur laquelle l'antivol est illustré en position non verrouillée ;
- la figure 3 est une vue similaire à celle de la figure 2 sur laquelle l'antivol est illustré en position verrouillée ;
- la figure 4 est une vue similaire à celle de la figure 3 sur lequel l'antivol est illustré dans la position qu'il occupe lorsque la colonne de direction est soumise à un couple très important ;
- la figure 5 est une vue en perspective d'un mode de réalisation détaillé du tronçon principal du fourreau de guidage du pêne de verrouillage conforme aux enseignements de l'invention ;
- la figure 6 est une vue détaillée en perspective du tronçon d'extrémité et du fourreau de guidage associé au tronçon principal illustré à la figure 5 ; et
- la figure 7 est une vue en perspective en position assemblée des deux tronçons du fourreau de guidage.

Dans la description qui va suivre des composants identiques ou similaires sont désignés par les mêmes chiffres de référence sur toutes les figures.

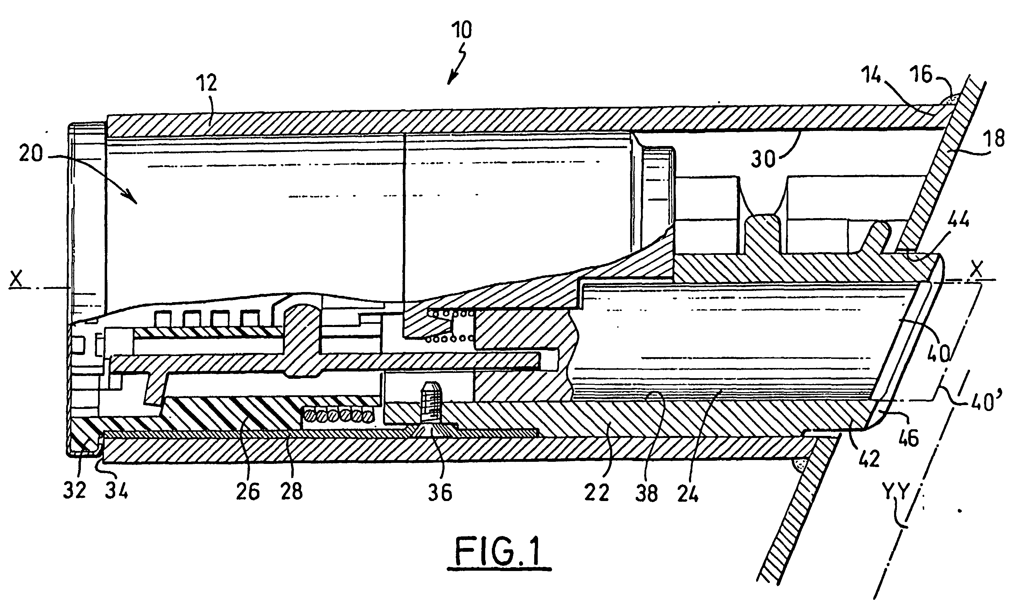

On a représenté sur la figure 1 un antivol 10 de direction de véhicule automobile qui est monté dans un tube métallique d'antivol 12 d'axe général X-X dont une extrémité axiale 14 est fixée, par exemple par soudage 16, sur un tube 18 de colonne de direction.

Le tube 18 est un tube métallique d'axe général Y-Y et qui reçoit à rotation un arbre de colonne de direction (non représenté).

L'axe X-X s'étend sensiblement selon une direction radiale par rapport à l'axe Y-Y.

L'antivol 10 est constitué pour l'essentiel par un mécanisme d'entraînement 20, un fourreau de guidage 22 et un pêne de verrouillage 24.

Le mécanisme d'entraînement 20 comporte un stator 26 de forme générale cylindrique qui est renforcé par un boîtier tubulaire métallique 28 qui est monté vissé radialement dans l'alésage interne 30 du tube d'antivol 12.

Le stator 12 comporte un épaulement radial extérieur 32 qui, en position montée, est en appui axial contre la face annulaire d'extrémité 34 du tube d'antivol 12.

Le fourreau de guidage 22 est une pièce de forme générale cylindrique qui est fixée axialement au stator 26 par l'intermédiaire du boîtier 28 auquel elle est vissée par une vis radiale 36.

Le fourreau de guidage 22 délimite intérieurement un couloir 38 formant glissière qui reçoit en coulissement, selon une direction axiale parallèle à l'axe X-X de l'alésage 30 et du stator 26, le pêne de verrouillage 24 qui est monté coulissant entre sa position non verrouillée dans laquelle sa face avant d'extrémité libre 40 est en retrait à l'intérieur du couloir 38, et une position de verrouillage dans laquelle sa face avant 40' fait saillie à l'extérieur du couloir 38 pour être reçue à l'intérieur du tube de colonne de direction 18 et dans un logement (non représenté) de l'arbre de direction.

Le pêne 24 présente une section transversale oblongue complémentaire de celle du couloir 38 afin d'éviter la rotation de cet élément autour de son axe.

Selon une conception connue, le pêne 24 est sollicité élastiquement en permanence par des ressorts 23, de la gauche vers la droite en considérant la figure 1, vers sa position de verrouillage et il est retenu par le mécanisme 20 dans sa position non verrouillée illustrée sur la figure 1, le changement de position étant commandé par un verrou du mécanisme d'entraînement 20 sur lequel le conducteur agit par exemple à l'aide d'une clé.

Dans la conception illustrée sur la figure 1, le tronçon d'extrémité 42 du fourreau de guidage 22 s'étend axialement à travers un trou 44 formé dans la paroi du tube de colonne de direction 18 de manière à assurer une bonne tenue mécanique de l'ensemble de l'agencement et à guider le pêne de verrouillage 24 en coulissement le plus près possible de l'arbre de direction.

Comme on l'a indiqué précédemment, les tolérances de fabrication des différents composants ne permettent pas d'assurer avec précision la position axiale de la face d'extrémité libre 46 du tronçon d'extrémité 42 du fourreau de guidage 22 par rapport au tube 18.

De plus, en cas de couple très important appliqué au volant en vue de procéder à une effraction de l'antivol, l'ensemble constitué par le mécanisme d'entraînement 20, le tube formant boîtier 28 et le fourreau de guidage 22 recule axialement, de la droite vers la gauche en considérant la figure 1, l'épaulement 32 s'éloignant de la face annulaire d'extrémité 34 du tube d'antivol 12.

Le tronçon d'extrémité libre 42 du fourreau 22 présente une section transversale oblongue complémentaire de celle du trou 44, par exemple une section sensiblement rectangulaire à coins arrondis.

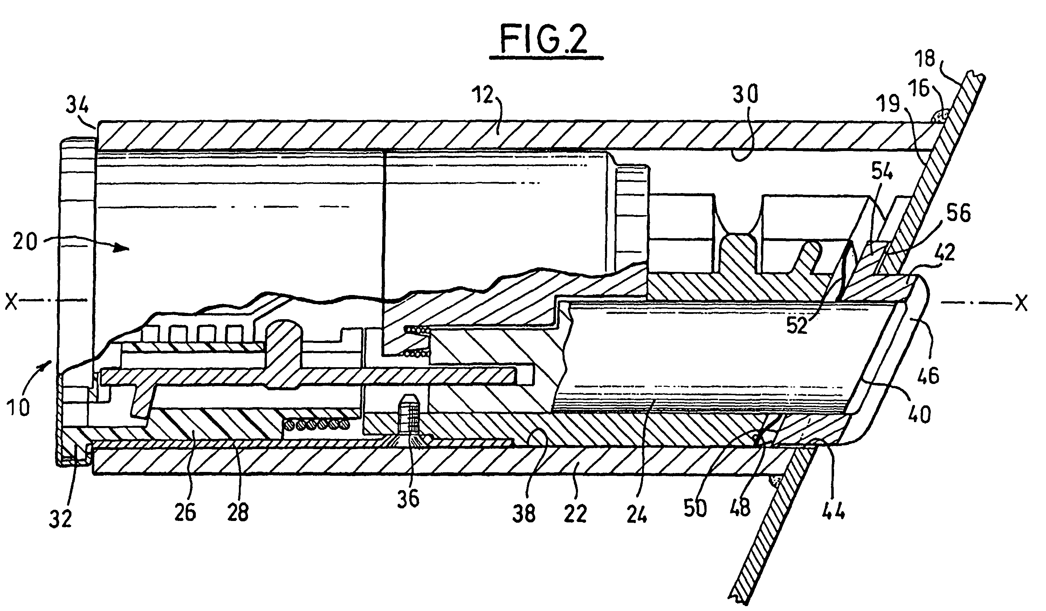

On décrira maintenant le mode de réalisation selon l'invention qui est illustré aux figures 2 à 4.

Comme on peut le constater sur ces figures, le tronçon d'extrémité libre 42 du fourreau de guidage 22 est réalisé sous la forme d'un élément séparé du tronçon principal constituant le fourreau de guidage 22 proprement dit.

Le tronçon d'extrémité 42 est reçu dans le trou de forme complémentaire 44 du tube de colonne de direction 18.

Il existe un jeu axial entre la face d'extrémité libre avant 48 du fourreau de guidage 22 et la face arrière en vis-à-vis 50 du tronçon 42 qui délimitent entre elles un espace axial dans lequel est agencé au moins un ressort ondulé 52 qui sollicite les faces 48 et 50, axialement en éloignement l'une de l'autre.

Le tronçon d'extrémité 42 se prolonge radialement vers l'extérieur, au niveau de sa face arrière 50, par une collerette radiale extérieure 54 dont la face avant 56 prend appui axialement contre la portion en vis-à-vis de paroi externe cylindrique 19 du tube de colonne 18.

Grâce à cette conception, on comprend aisément que quelles que soient les tolérances de fabrication des différents composants, le tronçon d'extrémité 42 occupe toujours la même position déterminée de montage par rapport au tube de colonne de direction 18, et il assure donc toujours de la même manière la plus efficace le guidage en coulissement de la partie d'extrémité avant du pêne de verrouillage 24.

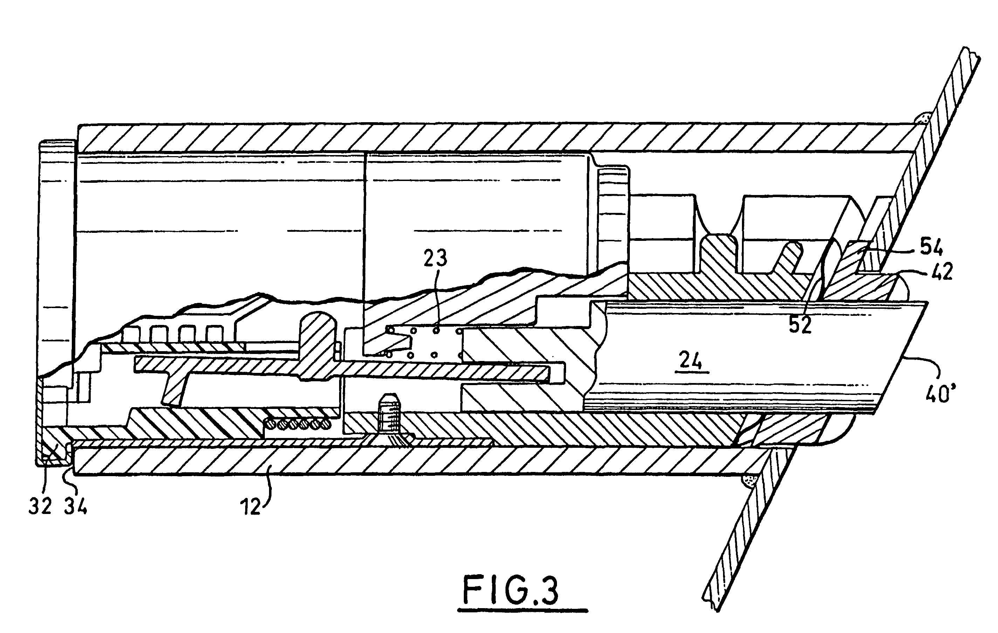

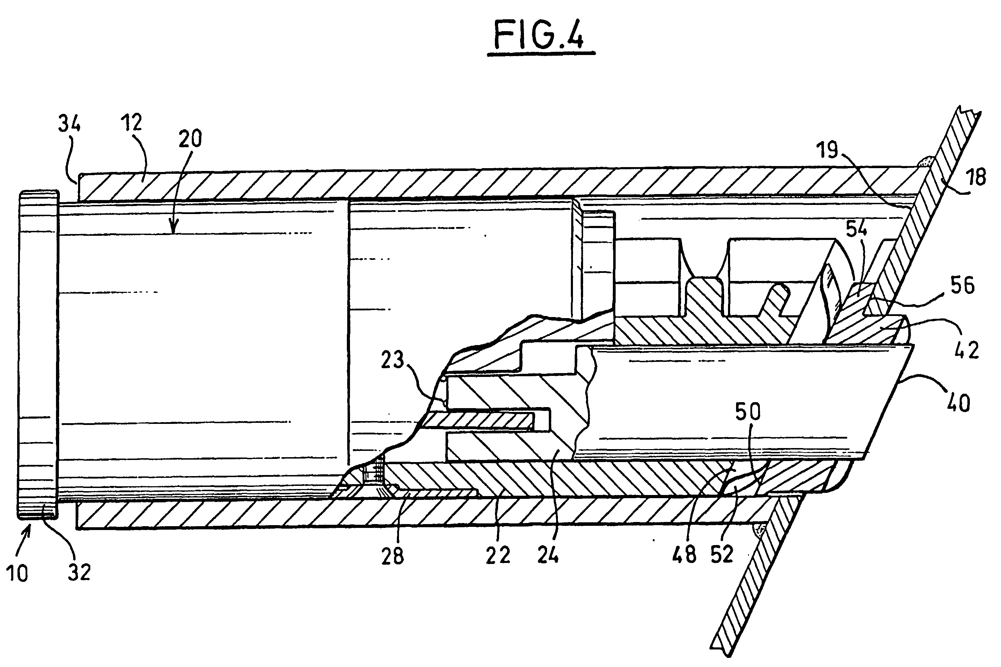

En fonctionnement normal et comme on peut le voir aux figures 2 et 3, le tronçon d'extrémité 42 associé au tronçon principal du fourreau de guidage 22 occupe toujours la même position par rapport au tube de direction 18 contre lequel il est sollicité élastiquement en permanence par les ressorts 23. En cas de tentative d'effraction, par application d'un couple très important sur l'arbre de direction, et comme on peut le voir sur la figure 4, le couple peut provoquer un déplacement de l'antivol 10 par rapport au tube d'antivol 12, de la droite vers la gauche en considérant la figure 4.

Ainsi, le mécanisme d'entraînement 20 avec le stator 26, le tube formant boîtier 28 et le tronçon principal 22 du fourreau de guidage et le pêne 24 recule axialement à l'intérieur du tube 12 en faisant apparaître un jeu axial entre la face annulaire d'extrémité 34 du tube 12 et l'épaulement 32.

Sous l'action des ressorts 23 qui le sollicitent axialement en permanence de la gauche vers la droite, le pêne de verrouillage occupe toujours sa position verrouillée dans laquelle son extrémité libre avant 40' est reçue dans un logement de l'arbre de direction.

Son guidage et son maintien en position verrouillée par rapport au tube de colonne 18 sont assurés de manière parfaitement fiable, dans les mêmes conditions que celles illustrées à la figure 3, grâce au tronçon d'extrémité 42 du fourreau de guidage dont la position n'a pas varié par rapport au tube de colonne de direction 18, le recul de l'antivol 10 ayant simplement aboutit à un éloignement axial des faces en vis-à-vis 48 et 50 du tronçon principal 22 et du tronçon d'extrémité 42, la position géométrique précise et déterminée du tronçon 42 par rapport au tube de colonne de direction 18 étant déterminée par la coopération de la face avant 56 de la collerette 54 avec la paroi cylindrique externe 19 du tube 18.

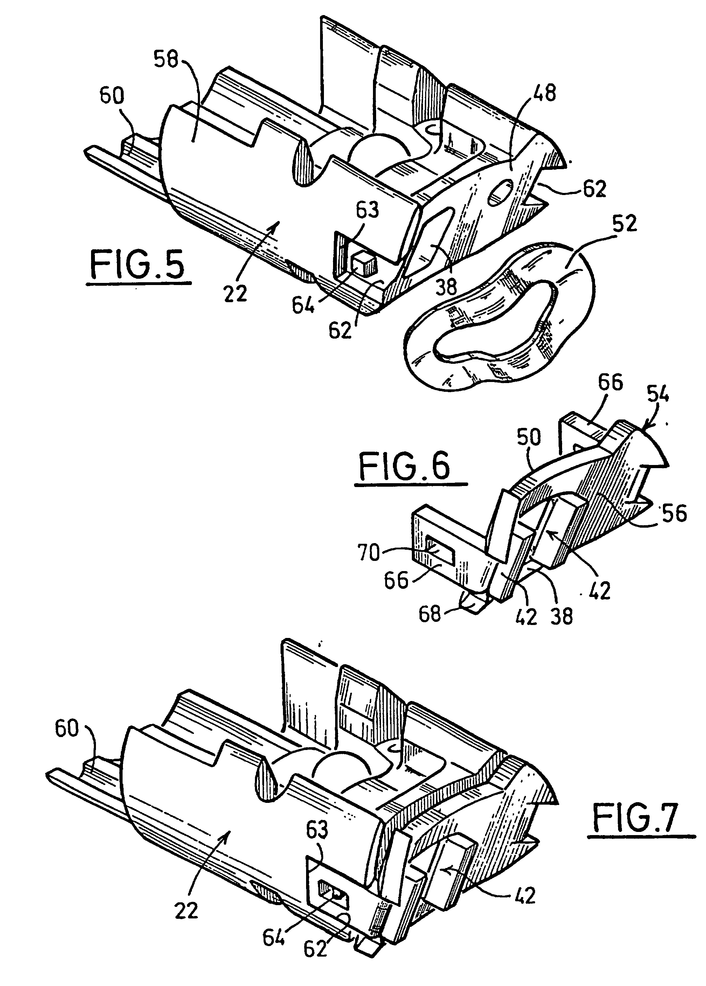

On décrira maintenant le mode de réalisation détaillée du tronçon principal 22 et du tronçon d'extrémité 42 du fourreau de guidage qui est illustré aux figures 5 à 7.

Le tronçon principal 22 du fourreau de guidage est une pièce moulée dont la paroi extérieure cylindrique 58 est prévue pour être reçue dans l'alésage 38 du tube d'antivol 12 et qui se prolonge vers l'arrière par un plancher 60 pour sa fixation au tube 28 formant boîtier du stator 26.

Au voisinage de sa face d'extrémité avant 48, le corps du tronçon principal 22 comporte, dans sa paroi cylindrique 58, deux rainures axiales diamétralement opposées 62 qui débouchent dans la face avant 48 et dont chacune comporte un ergot central 64.

Le tronçon d'extrémité libre 42 est constitué pour l'essentiel par deux portions de tronçons 42 qui sont prévues pour être reçu dans le trou de profil complémentaire 44 et qui sont reliés entre eux par la collerette radiale 54 qui est de forme incurvée de manière à épouser, lorsqu'elle est en appui, la paroi cylindrique externe 19 du tube de colonne de direction 18.

La collerette 50 se prolonge axialement par deux pattes diamétralement opposées 66 qui s'étendent axialement depuis le bord périphérique 68 de la collerette 54, vers l'arrière.

Chaque patte 66 présente un profil complémentaire de celui d'une rainure 62 du tronçon principal 22 dans laquelle elle est reçue en coulissement axial.

Chaque patte 66 comporte une encoche 70 qui s'étend axialement et qui peut recevoir en coulissement l'ergot correspondant 64.

L'agencement des pattes 66 et des rainures 62 a pour objet de permettre la réalisation d'un sous-ensemble complet constituant l'antivol, avec le fourreau de guidage en deux parties 22 et 42 et interposition d'au moins un ressort 52 qui puisse être monté dans le tube d'antivol 12 en position normale de montage illustrée notamment à la figure 2.

Dans la position assemblée du sous-ensemble constitué par le tronçon principal 22, le ressort 52 et le tronçon d'extrémité 42, illustrée à la figure 7, le ressort 52 est comprimé axialement, les pattes 66 étant en appui contre les fonds axiaux 63 des rainures 62.

La coopération des pattes 66 avec les rainures 62 a également pour fonction d'indexer angulairement le tronçon d'extrémité 42 par rapport au tronçon principal 22 et notamment d'aligner la portion du couloir 38 formée dans le tronçon d'extrémité avant 42 avec celle formée dans le tronçon principal 22.

## Revendications

1. Agencement d'un antivol (10) de direction de véhicule automobile du type comportant :
- un tube (12) d'antivol (10) fixé au tube (18) de colonne de direction et qui s'étend, selon une direction transversale (X-X) sensiblement radiale par rapport à l'axe (Y-Y) du tube de colonne de direction, en regard d'un trou (44) formé dans le tube (18) de colonne de direction ; et
- un antivol (10) monté dans le tube d'antivol (12) et qui comporte un mécanisme (20) d'entraînement et un fourreau de guidage (22, 42), lié axialement au mécanisme (20), dont une extrémité (42) s'étend axialement à travers le trou (44) du tube de colonne de direction (18) et qui guide en coulissement un pêne de verrouillage (24) dont les déplacements sont commandés par le mécanisme (20), entre une position de repos dans laquelle l'extrémité libre (40) du pêne (24) est en retrait par rapport à l'extrémité (46) du fourreau (22, 42), et une position de verrouillage dans laquelle l'extrémité libre (40') du pêne (24) fait saillie axialement à l'intérieur du tube de colonne de direction (18) pour être reçue dans un logement de l'arbre de direction ;
**caractérisé en ce que** le fourreau de guidage (22,42) comporte un tronçon principal (22) lié axialement au mécanisme d'entraînement (20) et un tronçon d'extrémité (42) monté coulissant axialement (X-X) par rapport au tronçon principal (22), et **en ce que** le tronçon d'extrémité (42) est sollicité élastiquement par des moyens élastiques (52) vers une position déterminée par rapport au tube de colonne de direction (18, 19).

2. Agencement selon la revendication 1, **caractérisé en ce que** le tronçon d'extrémité (42) du fourreau de guidage est monté coulissant dans le trou (44) du tube de colonne de direction (18), et **en ce qu'**il comporte une collerette de butée (54) qui s'étend radialement vers l'extérieur en regard de la paroi externe (19) du tube de colonne de direction (18) contre laquelle (19) elle est sollicitée par les moyens élastiques (52).

3. Agencement selon la revendication 2, **caractérisé en ce que** les moyens élastiques (52) sont interposés entre la collerette (54) et la face d'extrémité en vis-à-vis (48) du tronçon principal (22) du fourreau de guidage.

4. Agencement selon l'une quelconque des revendications précédentes, **caractérisé en ce qu'**il comporte des moyens d'indexation angulaire du tronçon d'extrémité (42) par rapport au tube de colonne de direction (18) et par rapport au tronçon principal (22) du fourreau de guidage.

5. Agencement selon l'une quelconque des revendications précédentes, **caractérisé en ce qu'**il comporte des moyens (62-66) pour limiter la course de déplacement relatif entre le tronçon principal (22) et le tronçon d'extrémité (42) du fourreau de guidage.

6. Agencement selon l'une des revendications 4 ou 5 prise au singulier avec la revendication 2, **caractérisé en ce que** le tronçon d'extrémité (42) du fourreau de guidage comporte deux pattes diamétralement opposées (62) qui s'étendent axialement depuis le bord périphérique (68) de la collerette (54) et dont chacune (66) est reçue en coulissement dans une rainure complémentaire (62) formée dans le tronçon principal (22) du fourreau de guidage.

7. Agencement selon la revendication 6 prise en combinaison avec la revendication 5, **caractérisé en ce que** chaque patte (66) comporte une encoche axiale (70) dans laquelle est reçu avec jeu axial un ergot (64) porté par le tronçon principal (22) du fourreau de guidage.

8. Agencement selon l'une des revendications 2, 6 ou 7, **caractérisé en ce que** la collerette (54) est incurvée (56) pour épouser la forme cylindrique (19) de la paroi externe du tube de colonne (18).

9. Agencement selon l'une quelconque des revendications précédentes, **caractérisé en ce que** le mécanisme d'entraînement (20) comporte un boîtier tubulaire (28) monté vissé radialement dans le tube d'antivol (12, 30) et auquel est fixé le tronçon principal (22) du fourreau de guidage.

## Claims

1. Configuration of a motor-vehicle anti-theft steering lock device (10), of the type including:
- an anti-theft device (10) tube (12) fixed to the steering-column tube (18) and which extends, in a transverse direction (X-X) which is substantially radial with respect to the axis (Y-Y) of the steering-column tube, facing a hole (44) formed in the steering-column tube (18); and
- an anti-theft device (10) mounted in the anti-theft tube (12) and which includes a drive mechanism (20) and a guide sleeve (22, 42) linked axially to the mechanism (20), one end (42) of which extends axially through the hole (44) of the steering-column tube (18) and which guides a locking bolt (24) in sliding motion, the movements of which are controlled by the mechanism (20), between a rest position in which the free end (40) of the bolt (24) is withdrawn with respect to the end (46) of the sleeve (22, 42), and a locking position in which the free end (40') of the bolt (24) projects axially inside the steering-column tube (18) so as to be accommodated in a housing of the steering shaft;
**characterised in that** the guide sleeve (22, 42) includes a main segment (22) linked axially to the drive mechanism (20) and an end segment (42) mounted axially sliding (X-X) with respect to the main segment (22), and **in that** the end segment (42) is pressed elastically by elastic means (52) towards a defined position with respect to the steering-column tube (18, 19).

2. Configuration according to Claim 1, **characterised in that** the end segment (42) of the guide sleeve is mounted sliding in the hole (44) of the steering-column tube (18), and **in that** it includes an abutment collar (54) which extends radially outwards facing the outer wall (19) of the steering-column tube (18) against which (19) it is pressed by the elastic means (52).

3. Configuration according to Claim 2, **characterised in that** the elastic means (52) are interposed between the collar (54) and the opposing end face (48) of the main segment (22) of the guide sleeve.

4. Configuration according to any one of the preceding claims, **characterised in that** it includes means for angular indexing of the end segment (42) with respect to the steering-column tube (18) and with respect to the main segment (22) of the guide sleeve.

5. Configuration according to any one of the preceding claims, **characterised in that** it includes means (62-66) for limiting the relative displacement travel between the main segment (22) and the end segment (42) of the guide sleeve.

6. Configuration according to one of Claims 4 and 5 taken singly with Claim 2, **characterised in that** the end segment (42) of the guide sleeve includes two diametrally opposed lugs (66) which extend axially from the peripheral edge (68) of the collar (54) and each of which (66) is accommodated, in sliding motion, in a complementary groove (62) formed in the main segment (22) of the guide sleeve.

7. Configuration according to Claim 6 taken in combination with Claim 5, **characterised in that** each lug (66) includes an axial notch (70) in which is accommodated, with axial clearance, a stud (64) carried by the main segment (22) of the guide sleeve.

8. Configuration according to one of Claims 2, 6 and 7, **characterised in that** the collar (54) is curved (56) so as to match the cylindrical shape (19) of the outer wall of the steering tube (18).

9. Configuration according to any one of the preceding claims, **characterised in that** the drive mechanism (20) includes a tubular housing (28) mounted screwed radially into the anti-theft tube (12, 30) and to which the main segment (22) of the guide sleeve is fixed.

## Patentansprüche

1. Anordnung einer Diebstahlsicherung (10) an der Lenksäule eines Kraftfahrzeuges mit:
- einem Rohr (12) für die Diebstahlsicherung (10), welches an dem Mantelrohr (18) der Lenksäule befestigt ist und welches sich hinsichtlich der Richtung seiner Längsachse (X-X) im wesentlichen radial in bezug auf die Achse (Y-Y) des Mantelrohres der Lenksäule gegenüber einer in dem Mantelrohr (18) der Lenksäule vorgesehenen Öffnung (44) erstreckt; und
- einer Diebstahlsicherung (10), welche in dem Lenkschloßrohr (12) montiert ist und welche einen Antriebsmechanismus (20) und eine axial an dem Mechanismus (20) befestigte Führungshülse (22, 24) umfaßt, deren eine Ende (42) sich axial durch die Öffnung (44) des Mantelrohres (18) der Lenksäule erstreckt und welche einen verschiebbaren Verriegelungsbolzen (24) führt, dessen Verschiebungen zwischen einer Ruhestellung, in der das freie Ende (40) des Bolzens (24) in bezug auf das Ende (46) der Führungshülse (22, 42) zurückgezogen ist, und einer Verriegelungsstellung durch den Mechanismus (20) betätigbar ist, bei welcher das freie Ende (40') des Bolzens (24) axial in das Innere des Mantelrohres (18) der Lenksäule ragt, um in eine Aufnahme der Lenkspindel einzugreifen;
**dadurch gekennzeichnet, daß** die Führungshülse (22, 42) ein Hauptteil (22), welches axial mit dem Antriebsmechanismus (20) verbunden ist, und ein in bezug auf das Hauptteil (22) axial verschiebbares (X-X) Endstück (42) umfaßt, und daß das Endstück (42) durch elastische Mittel (52) elastisch in Richtung auf eine vorgegebene Stellung in bezug auf das Mantelrohr (18, 19) der Lenksäule belastet ist.

2. Anordnung nach Anspruch 1, **dadurch gekennzeichnet, daß** das Endstück (42) der Führungshülse verschiebbar in der Öffnung (44) des Mantelrohres (18) der Lenksäule angeordnet ist, und daß es einen kragenförmigen Anschlag (54) aufweist, der sich radial nach außen gegenüber der äußeren Seitenwand (19) des Mantelrohres (18) der Lenksäule erstreckt, gegen welche sie durch die elastischen Mittel (52) belastet ist.

3. Anordnung nach Anspruch 2, **dadurch gekennzeichnet, daß** die elastischen Mittel (52) zwischen dem Kragen (54) und der gegenüberliegenden Stirnfläche (48) des Hauptteiles (22) der Führungshülse angeordnet sind.

4. Anordnung nach einem der vorhergehenden Ansprüche, **dadurch gekennzeichnet, daß** sie Mittel zur Verrastung hinsichtlich der Winkellage des Endstückes (42) in bezug auf das Mantelrohr (18) der Lenksäule und in bezug auf das Hauptteil (22) der Führungshülse umfaßt.

5. Anordnung nach einem der vorhergehenden Ansprüche, **dadurch gekennzeichnet, daß** sie Mittel (62-66) zur Begrenzung des relativen Bewegungshubes zwischen dem Hauptteil (22) und dem Endstück (42) der Führungshülse umfaßt.

6. Anordnung nach einem der Ansprüche 4 oder 5 jeweils in Verbindung mit Anspruch 2, **dadurch gekennzeichnet, daß** das Endstück (42) der Führungshülse zwei diametral gegenüberliegende Klauen (66) aufweist, die sich axial bis zu dem umfangseitigen Rand (68) des Kragens (54) erstrecken und die jeweils verschiebbar von einer entsprechenden, in dem Hauptteil (22) der Führungshülse befindlichen Nut (62) aufgenommen werden.

7. Anordnung nach Anspruch 6 in Kombination mit Anspruch 5, **dadurch gekennzeichnet, daß** jede der Klauen (66) eine axiale Ausnehmung (70) aufweist, welche, mit axialem Spiel, jeweils einen Vorsprung (64) aufnimmt, der an dem Hauptteil (22) der Führungshülse befestigt ist.

8. Anordnung nach einem der Ansprüche 2, 6 oder 7, **dadurch gekennzeichnet, daß** der Kragen (54) gebogen ausgebildet ist, um sich der zylinderförmigen äußeren Seitenwand (19) des Mantelrohres (18) der Lenksäule anzupassen.

9. Anordnung nach einem der vorhergehenden Ansprüche, **dadurch gekennzeichnet, daß** der Antriebsmechanismus (20) ein rohrförmiges Gehäuse (28) umfaßt, welches in dem Lenkschloßrohr (12, 30) radial verschraubt montiert ist, und an dem das Hauptteil (22) der Führungshülse befestigt ist.
